# EUROPEAN PATENT SPECIFICATION

(11) **EP 2 018 097 B1**
(45) Date of publication and mention of the grant of the patent: **11.11.2015**
(21) Application number: 07748477.2
(22) Date of filing: 08.05.2007
(51) Int. Cl.: A01G 13/00

(54) **PLANT PROTECTION DEVICE**
PFLANZENSCHUTZVORRICHTUNG
DISPOSITIF POUR LA PROTECTION D'UNE PLANTE

(30) Priority: 16.05.2006 SE 0601083
(43) Date of publication of application: 28.01.2009
(73) Proprietor: MPH Skydd AB, 10522 Stockholm (SE)
(72) Inventor: LYCKEBÄCK, Leif, S-746 33 Bålsta (SE)
(74) Representative: Brann AB
(86) International application number: PCT/SE2007/050316
(87) International publication number: WO 2007/133159

(56) References cited:
- WO-A-03/061369
- WO-A1-93/20684
- WO-A2-2005/046312
- FR-A1- 2 850 242
- GB-A- 2 104 366
- GB-A- 2 290 691
- GB-A- 2 388 762
- SE-B- 386 564
- US-A- 1 704 801
- US-A- 5 692 337
- US-A1- 2003 041 512

## Description

### TECHNICAL FIELD OF INVENTION

The present invention refers to a plant protection device, and more specifically to a protective sheath designed to be applied circumferentially about a seedling upon plantation.

### BACKGROUND AND PRIOR ART

Damage of seedlings by pine weevil (lat. Hylobius abietis) attack is one of the major causes of seedling mortality at regeneration of coniferous forest.

Other important problems at regeneration of coniferous forest are game damage (mainly caused by grazing), drought and the slow juvenile growth of secondary tree species. Secondary tree species are adapted to grow in the shadow of other trees and are not apt for the intensive competition with vegetation at the open regeneration area.

The cost of planting coniferous seedlings is high and despite this the regeneration results are often poor. The development within the area of regeneration has only shown limited improvements of results and costs during the last decades, which indicates a lack of development of new concepts within this area. For example, today there are no integrated plant protections available on the market.

Typically, the following types of protection against pine weevil are available:

### Insecticides

Insecticides are widely used for protection against pine weevil. Today the chemical defense is dominant within the forest industry. However, a gradual decrease in the use of insecticides may be expected in view of environmental considerations. In countries such as Sweden, e.g., many of the chemicals used for this purpose will be forbidden as protection against pine weevil within the forthcoming years. Thus, in the years to come, the search for and development of environmentally friendly protection against pine weevil attacks is highly desired within the forest industry.

### Mechanical protection

Two main types of mechanical pine weevil protection can be identified: Barrier protection and protective Coating.
A) Barrier protection: Physical barriers against pine weevil attack are hitherto used only on a rather small scale, and mainly in tests. However, many of the known protection barriers suffer from weaknesses such as:
   - Low degree of protection against pine weevil due to:
      o Gaps forming between the protection and the soil surface, which allows the pine weevil to reach to the seedling.
      ∘ Vital parts of the protection are degraded to fast.
   - Biological side effects, such as:
      o Strangulation: Considering their shape, the protection often is degraded too slow which causes strangulation of the seedling as it grows radially.
      ∘ Root deformations: When the protection penetrates or encircles the root system (peat clod) of the seedling the protection will interfere with the growth of the root, which can cause root deformation.
   - High cost for the protection itself and/or for handling the protection:
      o Many protections cannot be applied rationally to the seedling or cannot be planted rationally together with the seedling.
B) Coating protection: Protective coatings are not widely used, mainly in connection with tests only, and due to a limited protective effect mostly in areas with lesser pine weevil problems. Even though some coatings have achieved good results of protection in tests, several critical technical obstacles have to be overcome before a commercial introduction will be justified. Primarily, the coating protection often requires large and expensive devices for applying the coating to the seedlings.

Generally, the mechanical protections against Pine weevil known today can only be used together with one specific type of seedlings, i.e. the containerized seedlings.

From the prior art, mechanical plant protection devices of the barrier type are previously known. None of them is however known to the applicant as being particularly intended for defending a young plant from attacks by the pine weevil.

For example, WO 03/061369 and GB2 388 762 both disclose a tubular tree shelter which is designed to be secured in surrounding relation to an already planted sapling or tree by being pinned or staked to the ground. The material used is a biodegradable plastic or resin coated material. None of these prior art devices is designed to provide a gripping engagement with the green parts of the sapling, and none is designed to provide a gradual rate of decomposition in the length extension of the sheath.

Another mechanical plant protection device of the mechanical barrier type is disclosed in U.S. patent application publication no. 2003/0041512 A1. A bag or a sleeve is disclosed and intended for use only temporarily during spraying of herbicide onto the ground between plants. The sleeve is dimensioned to be placed over an already planted tree or sapling while covering completely the whole plant from root to above the top of the plant. It is suggested to secure the sleeve to the ground during spraying by placing pebbles or soil onto the base of the sleeve. After spraying, the sleeve is removed and either collected or left on the ground where it successively decomposes. This sleeve is not designed to provide a gripping engagement with the green parts of the sapling, is not intended to provide a long term protection, and is also not designed to provide a gradual rate of decomposition in the length extension of the sheath.

Notably, the above devices are all intended and designed for applying onto plants which are already planted. Hence, there is still need for a commercially viable plant protection device which is suitable for applying to a sapling during plantation, to be supported on the sapling as the sapling is put into the soil.

Thus, as the future use of chemicals and insecticides will be forced to decrease in effect of expected prohibition by law, there is a desire and growing need within the forest industry to find mechanical protections against pine weevil attack that effectively replaces the insecticides. Today, however, no mechanical protection is available as a ready-to-use solution, and they cannot be seen as satisfactory substitutes to the chemical protections. The mechanical pine weevil protections all suffer from one or several of the following weaknesses:
- Poor protection against pine weevil attack
- Serious biological side-effects (strangulation and/or root deformations)
- Critical steps of product/ application technique are to be solved
- Lack of technique and/or physical device for large scale production and/or application.

Further, it can be concluded that there is in the forest industry a need for an integrated pine weevil protection that also improves the conditions and performance of the seedling in relation to other important problems of forest regeneration, such as game damage, drought, and competition from other vegetation.

### SUMMARY OF THE INVENTION

The present invention aims to meet the above noted needs and desires from community and from the forest industry. The invention specifically aims to meet the need for an effective defense against pine weevil attacks primarily, and which in addition preferably also provides an integrated capacity for reducing or avoiding one or several of other problems involved in the growing of seedlings, such as drought and/or animal grazing and/or competing vegetation.

An overall object of the present invention is to provide a plant protection device satisfying some or all of these aims while being environmentally safe and supporting the continued growth of the seedling.

One object of the present invention is therefore to provide a plant production device that effectively disintegrates into nature friendly components, preferably at a controllable rate of decomposition, without causing problems such as strangulation of the stem or root deformations to the seedling as it continues to grow.

Another object is equally to provide a plant protection device that effectively encourages an accelerated vertical as well as radial growth of the seedling.

Still another object is to provide a plant protection device that allows simplified application onto the seedling in a planting procedure.

Yet another object is to provide a plant protection device accepting conventional planting techniques involving the use of planting pipes.

A further object is to provide a plant protection device that is producible at low production costs and which allows a space-saving storage and transport.

Related to the group of barrier protections, the plant protection device according to the invention is useful in connection with containerized seedlings on one hand, and bare-root seedlings on the other.

Some or all of the above objects and aims are met in a plant protection device as specified in the accompanying claims, the subordinated ones of which define advantageous embodiments of the invention specified in claim 1.

Briefly, a plant protection device according to the present invention is disclosed in claim 1.

In advantageous embodiments of the invention, the sheath is produced from a flexible material, and said gripping force is provided from a flexible wall urging the sheath towards a laterally collapsed condition.

In other embodiments the gripping force is provided from a local reduction of said inner transverse section of the sheath. Such reduction or restriction is advantageously located at the mouth end of the sheath, and may be realized through an inner transverse section which gradually decreases towards the mouth end. Such embodiments includes tubular sheaths having a first radius at a top end, and at a bottom end a second radius wider than said first radius, and wherein below a region at the top end the tubular sheath made of decomposable material is treated to provide a slower rate of decomposition than the rate of decomposition at said top end region. Further, at a bottom region the sheath made of decomposable material may be treated so as to provide a slower rate of decomposition than a rate of decomposition above said bottom region. Such treatment of the material comprises at least one of impregnation, coating, added material thickness and additional layers of material.

In yet another embodiment, the gripping force is provided from projections extending radially inwards from an inner side of the sheath wall defining the inner transverse section of the tubular sheath.

The tubular sheath is preferably composed of a fibrous nature material which is treated in order to provide a gradual rate of decomposition in the length extension of the tubular sheath. E.g., the material may be cellulose fibers forming a web or sheet of material which is treated with a water repellant agent such as stearic acid, oil or a polymer coating, e.g. The rate of decomposition may be controlled so as to be higher towards the mouth end, which may be realized by appropriate choice of impregnating agent/agents, or through varying amounts of agent/agents applied. The rate of decomposition may alternatively be varied by choosing a wall thickness at the insert end that is greater than a wall thickness at the mouth end of the tubular sheath. In such embodiments, the greater wall thickness at the insert end may be provided through additional layers of material.

A plant protection device according to the invention may be realized by folding a sheet of material, the meeting longitudinal edges of which are jointed in a seam, such as through gluing, e.g. In.a generally conical embodiment of the plant protection device, the double-folded sheet of material is additionally folded double at the mouth end, and not at the insert end. Other advantageous embodiments comprises first and second tubular sheaths in telescopic relation, as well as sheaths having ribs or flaps that project upwards from the periphery in the mouth end of the sheath.

Further advantageous features and details of the new plant protection device will appear from the detailed description given below.

### BRIEF DESCRIPTION OF THE DRAWINGS

Embodiments and examples of the invention will be more closely explained below with reference to the accompanying diagrammatic drawings, wherein
Figs. 1a-1c illustrate the formation of first and second embodiments of the plant protection device from a single sheet of material;
Figs. 2 - 4 illustrate the formation of third, fourth and fifth embodiments, respectively; Figs. 5a and 5b are sectional views showing the plant protection device in storing and application modes, respectively, in a transverse sectional plane V-V of fig. 2,
and
Figs. 6a-6d are longitudinal sections diagrammatically illustrating different embodiments of the plant protection device in axial fixation onto a seedling.

### DETAILED DESCRIPTION OF THE INVENTION

In the following disclosure, the term decomposable material refers to a material that gradually transforms through a decomposition process into a fully disintegrated condition wherein material components no longer attach.

A plant protection device according to the present invention comprises an elongate member extending longitudinally from an insert end to a mouth end, the elongate member forming a tubular sheath defining an inner tubular section transversally to the longitudinal, the size of which allows the sheath to be threaded over a seedling while engaging the green part of the seedling from its root end to below its top end. The length of the tubular sheath is chosen in relation to the height of the seedling, such that in applied position the sheath encloses the green part, i.e. stem, branches and needles, from root system to below the top-bud and the upper lateral buds of the seedling.

The material structuring the sheath is chosen from decomposable materials that successively transforms into a totally disintegrated condition. The rate of decomposition may be controlled, as further described below, to provide an operative protection for about 2-3 years from planting the seedling, whereas the protective sheath is disintegrated in its entirety within about 6 years from planting, this way avoiding any risk of strangulation. As will also be described below, the rate of decomposition may be controlled to vary in the length direction of the sheath, by corresponding treatment of the material. Such treatment may comprise at least one of impregnation, coating, added material thickness and additional layers of material.

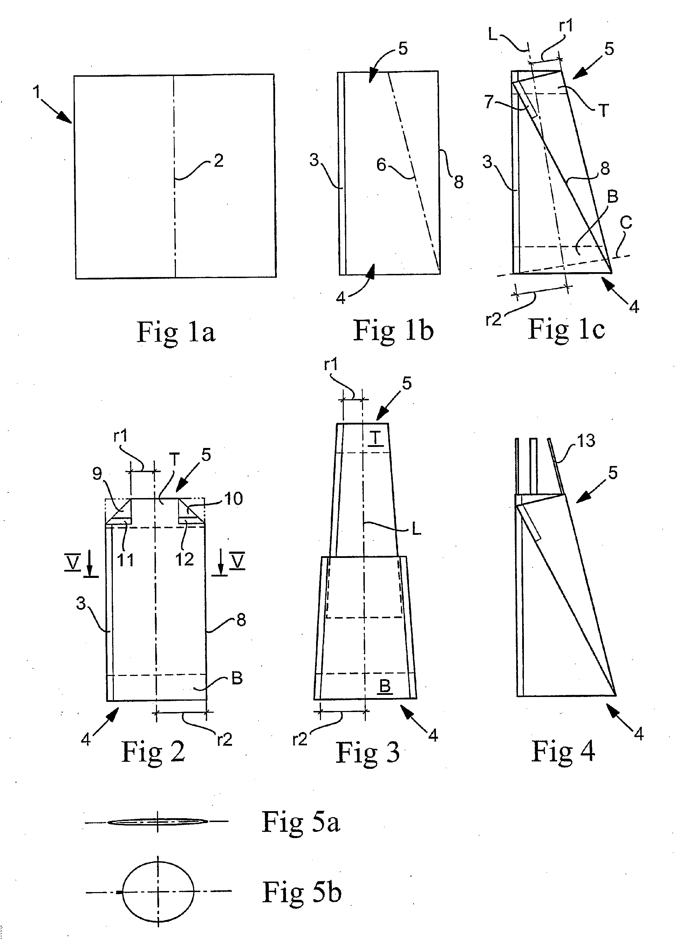

The different embodiments illustrated in the drawings may all be formed from a planar sheet of material 1 which is folded double at a folding line 2, as seen in figs. 1a-1b. The meeting longitudinal edges are jointed in a seam 3, such as through gluing, providing this way a flat elongate member that is deformable into a tubular sheath extending longitudinally from a bottom or insert end 4 to a top or mouth end 5.

However, similarly operating tubular sheets may be alternatively formed from planar sheets of material, such as through cutting sheath sections which are combined into a tubular member by joining the longitudinal margins of the sheath sections, or through a rolling procedure wherein a planar sheet of material is formed to a tube which is sealed at a longitudinal seam.

Starting from a rectangular sheet of material, a straight cylindrical sheath may be formed as in fig. 1b, illustrating a first embodiment of the plant protection device. However, though not illustrated in drawings, starting from a generally triangular sheet of material a conical sheath may be formed through the single folding and joining of meeting edges.

As illustrated in figs. 1b-1c, showing a second embodiment of the invention, a conical sheath may alternatively be formed through a second folding line 6, that runs diagonally from a center position at the mouth end to a corner position at the insert end of the double-folded sheet of material. The second folding may likewise be secured through gluing, at least locally as indicated by reference number 7, or alternatively along the length of the longitudinal and folded-in edge 8 of the double-folded sheet of material. If desired, the insert end 4 may be cut as indicated in fig. 1c by a broken line c, in order to achieve a base oriented transversely to the longitudinal L.

With reference to fig. 2, a third embodiment of the invention involves the folding in of one, or both, mouth end corners 9, 10 of the double-folded sheet of material, and attaching the folded-in corners to the exterior of the sheath as indicated at 11, 12.

In this connection, specifically advantageous embodiments of the invention comprise a tubular sheath having a first radius r1 at the top end 5, and at the bottom end 4 a second radius r2 wider than said first radius, wherein below a region T at the top end the sheath made of decomposable material is treated to provide a slower rate of decomposition than a rate of decomposition at said top end region. More specifically, the rate of decomposition in the top end region T may be controlled through corresponding treatment of the material so as to preserve the integrity of the top region T primarily up to termination of the planting procedure and for a maximum of 3 years, while below this top region the material is treated so as to preserve the integrity of the sheath wall up to 2 or 3 years (depending on the risk of Pine weevil attack) and for a maximum of about 6 years, all counted from the time of planting. Also, at a bottom region B, the material may be additionally treated through at least one of impregnation, coating, added material thickness and additional layers of material, in order to preserve the integrity of the bottom region for the operative time of protection in spite of the more aggressive environment resulting from ground contact.

In a fourth embodiment, illustrated in fig. 3, the plant protection device is composed of two sheaths in telescopic relation, this way allowing adjustment of the length of the tubular sheath with respect to the height of the seedling. The telescopic embodiment comprises an inner conical sheath coaxially adjustable within an outer conical sheath, such that a fixed axial dimension or height of the sheaths in combination is achievable by extending the sheaths telescopically until friction locks the sheaths in extended position.

Fig. 4 illustrates yet another embodiment wherein ribs 13 project upwards from the mouth end. The ribs 13 may be formed through slitting or cutting an end area of the planar sheet of material before folding, e.g., or by attaching separate ribs to the sheet of material. The ribs 13 are operative for preventing animals from grazing on the top-bud of the seedling, projecting from the mouth end of the sheath when applied about the seedling.

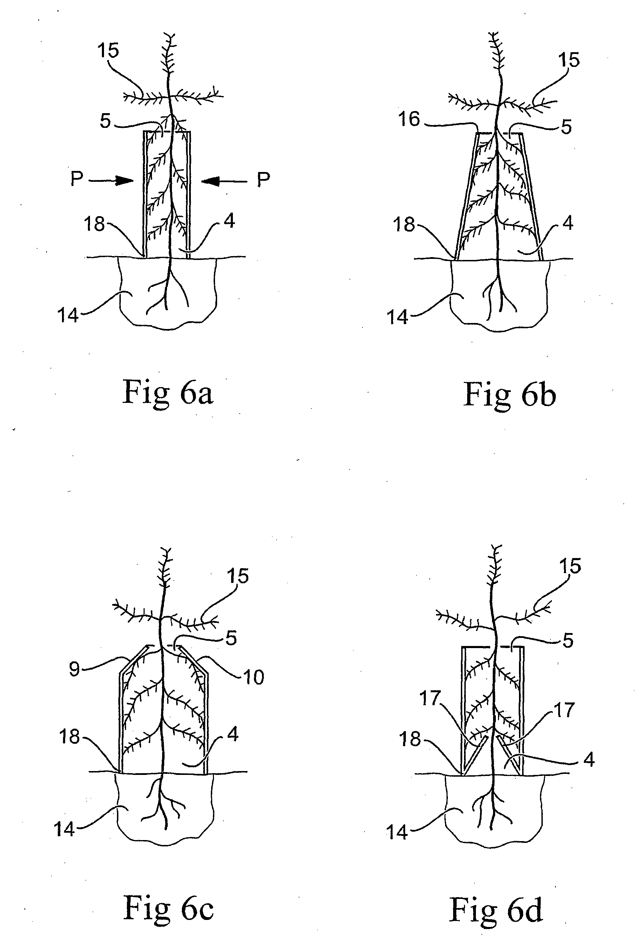

Fig. 5a illustrates a storing/transportation mode of the plant protection device, the generally flat storing condition of fig. 5 being typical for all embodiments of the sheath when produced as described. Thus, in result of being produced by folding and connecting the meeting edges of a planar sheet of material, the tubular sheath so produced tends to collapse into a generally flat condition suitable for storing and transport with a minimum space requirement. By applying, manually or by a suitable tool, pressure in opposite transverse directions towards the longitudinal edges thereof, the collapsed sheath is openable as illustrated in fig. 5b, providing an inner round transverse section by which the sheath is able to be threaded over a seedling from its top end towards its root end as illustrated in figs. 6a-6d.

In applied position as shown in figs. 6a-6d, the plant protection device rests by its insert end 4 supported onto the upper surface of a peat clod 14 (in case of containerized seedling) containing the seedling's root system. The length of the tubular sheath is adapted to the height of the seedling, allowing at least the top-bud and upper lateral buds 15 of the seedling to project from the mouth end, while the lateral buds there below are covered and enclosed by the tubular sheath.

In result of the inherent bias of a folded sheet material that tends to bring the tubular sheath into a collapsed condition (illustrated by arrows P in fig. 6a), the sheath is frictionally arrested about the seedling while engaging under a gripping force the green part comprising stem, branches and needles of the seedling as shown in fig. 6a. In effect of fatigue of material, the bias provided from folding will gradually cease resulting in a corresponding cease of the gripping force in advance of disintegration of the material structuring the sheath wall, i.e. in advance of disintegration of the sheath wall in its entirety.

Notably, the tubular sheath when applied about the seedling does not extend radially outside the peat clod, i.e. the sheath allows the protected containerized seedling to be advanced through the ordinary plantation pipes that are commonly used in the procedure of forest regeneration/planting. In addition, the sheath when applied also allows deep-planting of the seedling, wherein sheath and green part of the seedling are entered into the ground for approximately 40 mm, a planting procedure that is well known to further increase the survival rate of the seedlings. Also notable, and in result of being axially arrested by engagement with the green part of the seedling, the plant protection device need not penetrate into the peat clod or encircle the root system, thus avoiding the risk of future deformation of the seedling's root system.

The gripping force operative for axially arresting the tubular sheath about the seedling may alternatively be provided as illustrated in figs. 6b-6d. Arresting may thus be ensured by forming, as illustrated in figs. 6b and 6c, a restriction at the mouth end such as provided through the mouth periphery 16 of the conically shaped second embodiment, or through the folded in corners 9 or/and 10 of the third embodiment.

A gripping force may alternative be provided through the arrangement of projections 17 extending inwards/upwards from an inner side of the wall defining the tubular sheath, as illustrated in fig. 6d. The projections 17 may be formed through slitting or cutting flaps 17 at the insert end area of the planar sheet of material and turning the flaps upwards before folding the sheet double.

During plantation, the gripping force is sufficient to keep the sheath located about the seedling and arrested vertically to the green part thereof, while avoiding any gap being formed between the sheath base and the peat clod/root system. Thus, Pine weevils are prevented from reaching the seedling.

In applied position about the seedling, all embodiments of the tubular sheath rests by its base 18 contacting the top side of the peat clod 14 of the containerized seedling, or in case of a bare-root seedling contacting the top-side of the open root-system, while the mouth end is positioned below the top-bud and upper lateral buds 15 of the seedling as illustrated in figs. 6a-6d. In effect of the lower lateral buds being enclosed and engaged by a non-transparent tubular sheath, nutrient supply to the seedling is selectively directed to the top-bud and upper lateral buds, this way effecting an accelerated vertical growth, improving the competitiveness of the seedling and supporting a radial growth reaching a stem-base diameter of 13 mm which is considered safe from Pine weevil damages.

The plant protection device of the present invention is produced preferably from a material that is flexible in a direction transverse to the longitudinal extension of the device. The flexibility is advantageous and utilized in the handling of the seedling and sheath in combination. Thus, as the sheath is applied about the seedling, the two are easily handled simply by pressing the sheath tighter about the seedling between thumb and fingers in direction of the arrows P in fig. 6a. However, each embodiment disclosed results in a sheath that provides rigidity in the longitudinal direction.

The plant protection device of the present invention is produced from a decomposable material, preferably from a fibrous nature material such as cellulose fibers forming a sheet material that is treated with an impregnating agent or/and a coating agent, such as a polymer coating.

In tests, a non-colored or white paper of 160 g/m² weight treated with stearic acid shows an endurance of 2-3 years above ground level, before being decomposed. A gradually enhanced resistance to decomposition and slower rate of decomposition below the top end may be provided as further explained from a number of model tests of embodiments of the invention, below referred to as Integrated Plant Protection (IPP) models.

### Model 1

### A. Principle for construction of the IPP model 1:

1. The IPP starts out from a rectangular sheet.
2. The sheet is doubled and is glued/jointed in its entire length.
3. The double-folded and glued/jointed sheet is folded diagonally and only glued/jointed in its mouth end area, where the IPP consists of a material with a shorter decomposition time. (This could be done on one or on both sides of the IPP).
4. Viewed from above the IPP now consists of one single layer of material on one side and a triple layer of material on the other side. (If the IPP is folded diagonally and glued/jointed to both sides, viewed from above there will be three layers of material on both sides).

### B. The material and its properties

1. The exterior of the IPP is a white or lightly colored paper (Color laser copy paper).
2. The material of the IPP's upper part will, when positioned above the surface of the ground, be degraded/decomposed within 3 years (example: color laser).
3. The material of the IPP's middle part will, when positioned above the surface of the ground, be unaffected for 2-3 years, but degraded/decomposed within 6 years (example: color laser copy paper, dipped in fluid stearic acid after the IPP sheath is ready-made).
4. The material of the IPP's lower part (approximately the lowest 8 cm of the IPP) will, when positioned under the surface of the ground, be unaffected for 2-3 years, but degraded/decomposed within 6 years. The extra endurance of the IPP's lowest part can be achieved through coating/impregnation and/or through providing it with an extra layer of material (example: the lowest part of the IPP is dipped two times in stearic acid or supplied with an extra layer of paper, dipped in stearic acid).
5. First seam or joint is glued (example: contact glue).
6. Second seam or joint is glued (example: contact glue).

| | |
|---|---|
| Paper | = Color laser copy paper 160 g/m², from m-real |
| Stearic acid | = stearic acid from Nitor AB, |
| Contact glue | = contact glue 2960 from Casco, |

### Model 2

### A. Principle for construction of the IPP model 2.

1. As model 1.
2. As model 1.
3. The double-folded and glued/jointed sheet is folded diagonally and glued/jointed in its entire length. The seam itself will be degraded within 3 years.
4. As model 1.

### B. The material and its properties

1. As model 1.
2. The material of the IPP's upper part consists of the same material as the middle part.
3. As model 1.
4. As model 1.
5. The first seam will be unaffected for 3 years.
6. The second seam will be unaffected until the seedling has been planted and will be degraded within 3 years.

### Model 3

### A. Principle for construction of the IPP model 3.

1. As model 1.
2. As model 1.
3. The upper part of the double-folded and glued/jointed sheet is now folded twice (or once) diagonally and is glued/jointed in two places (or one, i.e. only at the upper part where the IPP consists of a material that will decompose/degrade within 3 years).
4. As model 1.

### B. The material and its properties.

1. As model 1.
2. As model 1.
3. As model 1.
4. As model 1.
5. As model 1.
6. Second seems.

### Model 4

### A. Principle for construction of the IPP model 4.

1. The IPP starts out from a rectangular sheet (as model 2, but twice the width).
2. The sheet is double-folded and glued/jointed in its entire length.
3. The double-folded and glued/jointed sheet is doubled and glued/jointed once more in its entire length.

### B. The material and its properties

1. As model 1.
2. As model 2, i.e. the upper part of the IPP consists of the same material as the middle part.
3. As model 1.
4. As model 1.

### All models

### C. Principle for delivery and opening of the IPP

1. The IPP is delivered in a flat, stackable condition.
2. The flat IPP can be opened by pressing towards the longitudinal edges near the insert end, e.g.

### Operation of the IPP models 1-4

### D. Application of the IPP on seedling.

1. The IPP can be applied to the seedling when its ready for delivery (i.e. when the cultivation in the nursery is completed). Application is possible manually or through an automated procedure.
2. The IPP can easily be thread onto the seedling from above until it meets the root system (peat clod) of the seedling. The IPP is then fixed vertically on the seedling as explained above and further exemplified below:
   a. The IPP is conical.
   b. The IPP is cylindrical.

### E. Planting and handling of the IPP and seedling together.

1. Seedling and IPP can be planted together using conventional technique (such as through the use of a planting pipe, e.g.), in a biologically optimal way (i.e. deep-planting) and with normal performance.
2. The material of the IPP is "flexible" and the seedling can be held indirectly through squeezing the walls of the IPP, without changing the vertical position of the IPP on the seedling (i.e. without creating a gap between the root system (peat clod) of the seedling and the insert end of the IPP).
3. The IPP will be fixed vertically on the seedling during planting through the friction/strain between the branches and needles of the seedling and the interiors of the IPP. This could be created in a number of ways. Below are presented a few examples how this could be achieved through one or more of the following functions:
   a. The IPP, and particularly its upper opening, is narrow enough by shape or added constrictions.
   b. Before application the IPP is flat or partly flat. Three-folded layers of material in the IPP walls will further strengthen this friction/strain.
   c. On the inside the IPP has flaps turned upwards.
4. The maximum diameter of the IPP is smaller than the diameter of the root system (peat clod) of the seedling, which makes seedling and IPP pass through the planting pipe without the IPP hindering its passage.

### F. Protection against attack of pine weevil.

1. The IPP will protect the newly planted seedling on the regeneration area during the period when its exposed to risk of pine weevil attack, normally during 2-3 years (depending on the size of the pine weevil population and its degree of activity).
2. The height of the seedling is enclosed by the IPP, with exception for the top-bud and upper lateral buds, i.e. approximately the upper 3-5 cm of the seedling, that should be exposed to open air. For lots of seedlings with great internal difference in height this could, for the individual seedling, be reached through:
   a. IPP's with adjustable heights (telescopic sheaths).
   b. The height of the individual IPP is variable.
   Tall seedlings will get a higher protection height and will therefore be better protected against pine weevil attack.
3. After application, the insert end of the IPP will be tightly resting against the root system (peat clod) of the seedling. The IPP will be fixed vertically on the seedling (as explained above). In this way gaps between the root system (peat clod) and the lower part/insert end of the IPP can be avoided once the seedling has been planted.
4. The IPP consists of material that will remain intact and doesn't allow the IPP to collapse during the period when the seedling is under risk of pine weevil attack, i.e. normally 2-3 years (depending on the size of the pine weevil population and its degree of activity). The lower part of the IPP will be in contact with the soil and will be exposed to a more rapid process of degradation/decomposition. The lower part therefore consists of a more perpetual material.
5. The IPP is white or lightly colored, which improves its protection against pine weevils that will avoid exposure on the light surface.
6. The IPP will encircle the major parts of the seedling. The enclosed parts, i.e. the lower branches, buds and needles, will die of and thereby attract fungi such as botrytis. The presence of decomposing organic materials and botrytis will further reduce the risk of Pine weevils attacking the stem of the seedling.

### G. Protection against drought.

1. The IPP decreases the transpiration of the seedling during the sensitive phase of establishment.
2. The IPP covers the major part of the seedlings transpiring parts (i.e. needles and branches) and thereby reduces its transpiration until the seedling has built up sufficient water supplying ability.
3. The IPP is white or lightly colored, which lowers the temperature of the seedling and thereby further reduces its transpiration.

### H. Protection against game damage (grazing), especially for seedlings planted during late summer/early autumn.

1. The IPP gives the seedling total or partial coverage in its full length.
2. The upper part of the IPP can be extended with ribs or flaps, partly covering the top of the seedling. The number of ribs can be two or more, and the ribs may be dimensioned to project from the mouth end at a length of about 30-50 mm, or 20-100 mm, if appropriate.

### I. More competitive growth habit for seedlings of secondary (shade tolerant) tree species (for example Norway spruce).

1. The continued growth of the seedling after planting will be focused to the top-bud and the upper lateral buds. The lower situated lateral buds will not continue to grow (i.e. will not be transformed into vital sprouts), which increases the amount of resources available to the growth of the top sprout and to the upper lateral sprouts. This growth habit will shorten the time to reach the diameter 13 mm at the base of the stem, when the seedling is protected from lethal pine weevil damage.
2. The full length of the seedling, with exception for the top-bud and the upper lateral buds, are totally covered by the IPP.

### J. Avoidance of negative impacts from the IPP on the continued growth of the seedling.

1. The IPP allows the different parts of the seedling (root system, stem and sprouts) continued growth without any negative impacts from the IPP.
2. (Root system) No part of the IPP will penetrate or laterally encircle the root system (peat clod), which will eliminate the risk of root deformations.
3. (Sprouts) The continued growth of the seedling will proceed from the top-bud and from the upper lateral buds. Lower situated lateral buds will not be reached by sunlight and will accordingly not be transformed into vital sprouts, but instead die of.
4. (Stem) To avoid strangulation of the stem caused by its radial growth, the different inner parts of the IPP (see above) will degrade/disintegrate in time with the radial growth of the seedling.
   a. For the models 1-3 the smallest upper, inner diameter (approximately 10-20 mm depending of the size of the seedling) will degrade/disintegrate after planting but within 3 years, i.e. before the stem reaches this diameter at this height. Then the IPP takes cylindrical shape, with the smallest inner diameter of approximately 20-40 mm, depending on the size of the seedling. Model 4 has a cylindrical shape already from the start. The cylinder will degrade/disintegrate, above and under the surface of the ground, within a maximum time of 6 years, i.e. before the stem of the seedling reaches the inner diameter of the IPP.
   b. The IPP is flat before and directly after application. After planting the tension between the seedling and the IPP ceases gradually and will not cause any strangulation through radial growth of the stem.
   c. If the IPP is supplied with inner flaps turned upwards - or other inner details - fixing the IPP at the seedling during planting, these will be degraded/disintegrated in time with the radial growth of the stem.

A common and essential feature of all embodiments is that the gripping force exerted on the green part of the seedling gradually ceases in result of fatigue or in result of decomposition of the material from which the sheath is formed, and in advance of a total disintegration of the material structuring the sheath. In other words, the sheath effectively protects the seedling by circumferentially enclosing the green part thereof also when the gripping force has ceased, until the decomposition process results in a total disintegration of the sheath wall. Through this measure strangulation of a growing plant can be avoided while maintaining protection from the non-engaging sheath surrounding the seedling. The above examples show that the desired operation also is attainable by controlling a rate of decomposition such that decomposition is faster in that region of the sheath that initially provides the gripping force. The examples also show that the initial gripping force may be provided through the formation of a local restriction of the tubular section enclosing the seedling, through the inherent lateral bias of a flexible sheath wall surrounding the seedling, or through the formation of internal projections engaging the green part of the seedling. As decomposition of the material progresses, the gripping force provided as indicated through the embodiments disclosed will cease correspondingly due to a gradual fatigue or disintegration of the material, enhanced or alternatively provided as desired through the appropriate treatment of the material resulting in the control of the decomposition rate.

As will be apparent for a person skilled in the art, the details and features of disclosed examples may be applied separately and in different combinations, all of which provide advantageous embodiments of the invention as claimed below.

## Claims

1. A plant protection device comprising a tubular sheath formed by a wall of decomposable material and extending longitudinally from an open insert end (4) to an open top end (5), the sheath wall defining an inner tubular section the size of which allows the sheath to be applied over a seedling while enclosing the seedling from its root end to below its top end, wherein the tubular sheath is formed from a double-folded sheet of material, the meeting longitudinal edges of which are joined in a seam, and in result of an inherent bias of the double-folded sheet of material that tends to bring the tubular sheath into a collapsed condition, the sheath is frictionally arrested about the seedling while engaging under a gripping force the green part of the seedling comprising stem, branches and needles, characterized that the gripping force is provided from a restriction (R1) of said tubular section of the sheath and the restriction (r1) is formed at the top end (5) of the sheath by folding in of one or both top end corners (9, 10) of the double-folded sheet of material, and attaching the folded-in corners to the exterior of the sheath, whereby the sheath is provided a first radius (r1) at the top end (5) and at the insert end (4) a second radius (r2) wider than said first radius, wherein below a region (T) at the top end the sheath is treated to provide a slower rate of decomposition than a rate of decomposition in said top end region (T).

2. The plant protection device of claim 1, wherein the sheath is composed of a fibrous nature material which is treated to provide a gradual rate of decomposition in the length extension of the sheath.

3. The plant protection device of claim 2, wherein at a bottom region (B) the sheath is treated to provide a slower rate of decomposition than a rate of decomposition above said bottom region (B).

4. The plant protection device of claim 2 or 3, wherein said treatment comprises at least one of impregnation, coating, added material thickness and additional layers of material.

5. The plant protection device of claim 4, wherein the sheath is composed of polymer coated cellulose fiber material.

6. The plant protection device of claim 4, wherein the sheath is composed of paper impregnated with stearic acid.

7. The plant protection device of any of claims 4 to 6, wherein the sheath has a wall thickness at the insert end that is greater than a wall thickness at the top end.

8. The plant protection device of claim 7, wherein the greater wall thickness at the insert end is provided through additional layers of material.

9. The plant protection device of any previous claim, comprising inner and outer tubular sheaths in telescopic relation.

## Patentansprüche

1. Pflanzenschutzvorrichtung, die eine rohrförmige Hülle aufweist, die durch eine Wand aus zersetzbarem Material ausgebildet ist und sich längs von einem offenen Einführungsende (4) zu einem oberen Ende (5) erstreckt, wobei die Hüllenwand einen inneren rohrförmigen Abschnitt definiert, dessen Größe zulässt, dass die Hülle über einen Setzling aufgebracht wird, während der Setzling von seinem Wurzelende bis unterhalb seines oberen Endes umschlossen wird, wobei die rohrförmige Hülle aus einer doppelt gefalteten Materiallage ausgebildet ist, deren sich treffende Längsränder in einem Saum verbunden sind, und wobei die Hülle als Ergebnis einer inhärenten Ausrichtung der doppelt gefalteten Materiallage, die dazu neigt, die rohrförmige Hülle in einen zusammengefalteten Zustand zu bringen, um den Setzling herum reibend haftet, während sie unter einer Haltekraft des grünen Teils des Setzlings, der einen Stil, Zweige und Nadeln aufweist, eingreift, **dadurch gekennzeichnet, dass** die Haltekraft von einer Einschnürung (r1) des rohrförmigen Abschnitts der Hülle bereitgestellt wird und die Einschnürung (r1) an dem oberen Ende (5) der Hülle durch Einfalten einer oder beider oberen Endecken (9, 10) der doppelt gefalteten Materiallage und Befestigen der eingefalteten Ecken an der Außenseite der Hülle ausgebildet wird, wobei die Hülle mit einem ersten Radius (r1) an dem oberen Ende (5) und einem zweiten Radius (r2), der größer als der erste Radius ist, an dem Einführungsende (4) versehen ist, wobei die Hülle unterhalb eines Bereichs (T) an dem oberen Ende behandelt ist, um eine langsamere Zersetzungsgeschwindigkeit als in dem oberen Endbereich (T) bereitzustellen.

2. Pflanzenschutzvorrichtung nach Anspruch 1, wobei die Hülle aus einem fasrigen Naturmaterial zusammengesetzt ist, das behandelt wird, um eine schrittweise Zersetzungsgeschwindigkeit in der Längenausdehnung der Hülle bereitzustellen.

3. Pflanzenschutzvorrichtung nach Anspruch 2, wobei die Hülle in einem unteren Bereich (B) behandelt ist, um eine langsamere Zersetzungsgeschwindigkeit als eine Zersetzungsgeschwindigkeit oberhalb des unteren Bereichs (B) bereitzustellen.

4. Pflanzenschutzvorrichtung nach Anspruch 2 oder 3, wobei die Behandlung Imprägnieren und/oder Beschichten und/oder Erhöhen der Materialdicke und/oder zusätzliche Materialschichten aufweist.

5. Pflanzenschutzvorrichtung nach Anspruch 4, wobei die Hülle aus polymerbeschichtetem Zellulosefasermaterial zusammengesetzt ist.

6. Pflanzenschutzvorrichtung nach Anspruch 4, wobei die Hülle aus mit Stearinsäure imprägniertem Papier zusammengesetzt ist.

7. Pflanzenschutzvorrichtung nach einem der Ansprüche 4 bis 6, wobei die Hülle eine Wanddicke an dem Einführungsende hat, die größer als eine Wanddicke an dem oberen Ende ist.

8. Pflanzenschutzvorrichtung nach Anspruch 7, wobei die größere Wanddicke an dem Einführungsende durch zusätzliche Materialschichten bereitgestellt wird.

9. Pflanzenschutzvorrichtung nach jedem vorhergehenden Anspruch, die innere und äußere rohrförmige Hüllen in einer teleskopischen Beziehung aufweist.

## Revendications

1. Dispositif de protection de plante comprenant une gaine tubulaire constituée d'une paroi de matériau décomposable et s'étendant longitudinalement d'une extrémité d'insert ouverte (4) à une extrémité de sommet ouverte (5), la paroi de gaine définissant une section tubulaire intérieure dont la taille permet à la gaine d'être appliquée au-dessus d'un semis tout en renfermant le semis depuis l'extrémité de ses racines jusqu'au-dessous de son extrémité de sommet, dans lequel la gaine tubulaire est constituée d'une feuille de matériau pliée en deux, les bords longitudinaux de celle-ci se rejoignant sont joints dans une jointure, et, en conséquence d'une polarisation inhérente de la feuille de matériau pliée en deux qui a tendance à mettre la gaine tubulaire dans un état affaissé, la gaine est arrêtée par frottement autour du semis tout en se mettant en prise, sous l'effet d'une force d'accrochage, avec la partie verte du semis comprenant une tige, des branches et des aiguilles, **caractérisé en ce que** la force d'accrochage est fournie à partir d'une restriction (r1) de ladite section tubulaire de la gaine et la restriction (r1) est formée à l'extrémité de sommet (5) de la gaine en repliant l'un ou les deux coins d'extrémité de sommet (9, 10) de la feuille de matériau pliée en deux et en attachant les coins repliés à l'extérieur de la gaine, de telle manière que la gaine présente un premier rayon (r1) à l'extrémité de sommet (5) et, à l'extrémité d'insert (4), un deuxième rayon (r2) plus grand que ledit premier rayon, dans lequel, au-dessous d'une région (T) à l'extrémité de sommet, la gaine est traitée pour présenter une vitesse de décomposition inférieure à une vitesse de décomposition dans ladite région d'extrémité de sommet (T).

2. Dispositif de protection de plante selon la revendication 1, dans lequel la gaine se compose d'un matériau naturel fibreux qui est traité pour présenter une vitesse de décomposition progressive dans l'extension longitudinale de la gaine.

3. Dispositif de protection de plante selon la revendication 2, dans lequel, à une région de fond (B), la gaine est traitée pour présenter une vitesse de décomposition inférieure à une vitesse de décomposition au-dessus de ladite région de fond (B).

4. Dispositif de protection de plante selon la revendication 2 ou 3, dans lequel ledit traitement comprend au moins l'un d'une imprégnation, d'un revêtement, d'une augmentation d'épaisseur de matériau et d'une augmentation de nombre de couches de matériau.

5. Dispositif de protection de plante selon la revendication 4, dans lequel la gaine se compose d'un matériau de fibres de cellulose enduit de polymère.

6. Dispositif de protection de plante selon la revendication 4, dans lequel la gaine se compose de papier imprégné d'acide stéarique.

7. Dispositif de protection de plante selon l'une quelconque des revendications 4 à 6, dans lequel la gaine présente une épaisseur de paroi à l'extrémité d'insert qui est supérieure à une épaisseur de paroi à l'extrémité de sommet.

8. Dispositif de protection de plante selon la revendication 7, dans lequel l'épaisseur de paroi supérieure à l'extrémité d'insert est fournie par des couches supplémentaires de matériau.

9. Dispositif de protection de plante selon l'une quelconque des revendications précédentes, comprenant des gaines tubulaires intérieure et extérieure en relation télescopique.
